(19) Europäisches Patentamt
European Patent Office
Office européen des brevets

(11) **EP 2 161 636 A1**

(12) **EUROPEAN PATENT APPLICATION**
published in accordance with Art. 153(4) EPC

(43) Date of publication:
**10.03.2010 Bulletin 2010/10**

(51) Int Cl.:
**G05B 19/418** (2006.01)   **G06Q 50/00** (2006.01)

(21) Application number: **08777476.6**

(22) Date of filing: **20.06.2008**

(86) International application number:
**PCT/JP2008/061332**

(87) International publication number:
**WO 2009/001775 (31.12.2008 Gazette 2009/01)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.06.2007  JP 2007169208**

(71) Applicant: **Sharp Kabushiki Kaisha**
**Osaka-shi, Osaka 545-8522 (JP)**

(72) Inventor: **ISSHIKI, Akitoshi**
**Osaka 545 8522 (JP)**

(74) Representative: **Treeby, Philip David William et al**
**R.G.C. Jenkins & Co**
**26 Caxton Street**
**London SW1H 0RJ (GB)**

(54) **ABNORMAL FACTOR SPECIFYING METHOD AND SYSTEM, PROGRAM FOR CAUSING COMPUTER TO EXECUTE THE ABNORMAL FACTOR SPECIFYING METHOD, AND RECORDING MEDIUM CAPABLE OF READING THE COMPUTER RECORDED WITH THE PROGRAM**

(57)    In an abnormal factor specifying method, principal component analysis is performed to extract at least one feature quantity best expressing a manufacturing condition of articles of manufacture determined to be non-defective from manufacturing data on the articles of manufacture (S2, S4). In a feature quantity space expressed with the extracted each feature quantity as an axis, a distance between an origin and a point representing the manufacturing data on each article of manufacture as a main significant difference between average manufacturing data at the time of non-defective article manufacturing and each manufacturing data at the time of defective article manufacturing, is calculated (S5). A contribution ratio of each manufacturing data in the main significant difference is calculated as each main influence (S6). Manufacturing data with the main influences at the time of defective article manufacturing being substantially increased from that at the time of non-defective article manufacturing is specified as an abnormal factor from the manufacturing data (S7, S8).

*Fig.1*

START

S1  OBTAIN STEP DATA

S2  DISTINGUISH DATA

S3  PRINCIPAL COMPONENT ANALYSIS

S4  EXTRACT REPRESENTATIVE PRINCIPAL COMPONENT

S5  CALCULATE MAIN, SUB SIGNIFICANT DIFFERENCES

S6  CALCULATE MAIN, SUB INFLUENCES

S7  DETERMINE SIGNIFICANT DIFFERENCE

S8  OUTPUT FACTOR CANDIDATE

END

**Description**

TECHNICAL FIELD

The present invention relates to abnormal factor specifying method and system, and more specifically relates to method and system for specifying manufacturing data which is a main factor in generating defective articles of manufacture when the defective articles of manufacture are generated in a production process having a plurality of manufacturing steps such as production process for semi conductor products, by analyzing manufacturing data which represent manufacturing conditions obtained from the production process with use of multivariate analysis.

The present invention also relates to a program for causing a computer to execute such an abnormal factor specifying method.

The present invention also relates to a computer-readable recording medium with such a program recorded thereon.

BACKGROUND ART

In order to perform efficient production in manufacturing steps for producing products in large quantities, it is important to specify manufacturing data which is a factor of abnormality when a manufacturing step is diagnosed as abnormal based on an inspection result of produced articles of manufacture or based on a characteristic value of the articles of manufacture, and to reset the specified manufacturing data to have normal values so as to promptly return the manufacturing step to a normal state. However, in the case where a large number of manufacturing steps are present like semiconductor manufacturing steps, the number of manufacture variables which can cause abnormalities amounts to enormous numbers, and therefore it is difficult for quality-control personnel to check the manufacture variables one by one. Accordingly, there has conventionally been proposed a method, for example in JP 2003-114713 A, for statistically analyzing production history information obtained in manufacturing steps and extracting manufacturing data which has large influence on generation of defective articles as an abnormal factor.

In the method of JP2003-114713 A, upon generation of a defective article, production history information including manufacturing data on every article of manufacture, which is of the same type as the article of manufacture which is defective, is obtained, and a principal component analysis is performed on a manufacturing data set for every article of manufacture. In the principal component analysis, a standardization for every manufacturing data is performed so as to have a mean of 0 and a variance of 1, and then a manufacturing data set X in N rows and M columns is decomposed as follows:

Math. 1

$$X = TV^T + E$$

In this case, N represents the number of articles of manufacture and M represents the number of manufacturing data. T is an orthogonal matrix of N × R representing a principal component score matrix, and V is a normalized orthogonal matrix of M × R referred to as an addition amount matrix. A superscript "$^T$" represents a transposed matrix. R represents the number of principal components to be extracted. E is equivalent to a residual variable which is not expressed by an extracted principal component model. The number of principal components is determined by stopping extraction of principal components when a residual square that is the square of a residual variable becomes, for example, about 20 to 30% of that in the case where the number of principal components is 0. Then, after principal component analysis using the extracted principal components is performed, a residual component E is calculated. If there is any article of manufacture whose residual component E exceeds an allowable range, then manufacturing data which is especially large in residual is specified as an abnormal factor.

Next, in a principal component space with the extracted each principal component as an axis, a Hotelling $T^2$ statistic value showing a distance from an origin to a point plotting the manufacturing data set for every article of manufacture in the principal component space is calculated. $T^2$ statistic value is calculated as follows:

Math. 2

$$T^2 = \sum_{r=1}^{R} \frac{t_r^2}{\sigma_{tr}^2}$$

wherein $t_r$ represents the r-th principal component score, and $\sigma_{tr}$ represents a standard deviation of the r-th principal component score.

If there is an article of manufacture having a residual variable which does not exceed the allowable range and having a calculated $T^2$ statistic value which exceeds the allowable range, then a principal component which has the largest absolute value of a contribution to the $T^2$ statistic value is specified as a principal component which is an abnormal factor. Further, manufacturing data whose contribution to the specified main component has the same sign as the principal component and which has the largest absolute value is specified as an abnormal factor.

SUMMARY OF INVENTION

TECHNICAL PROBLEM

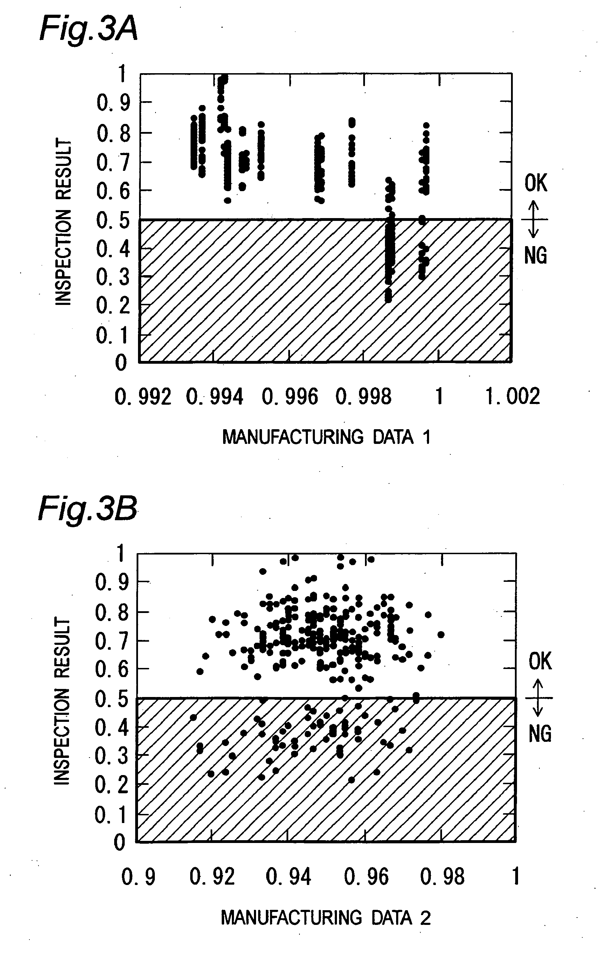

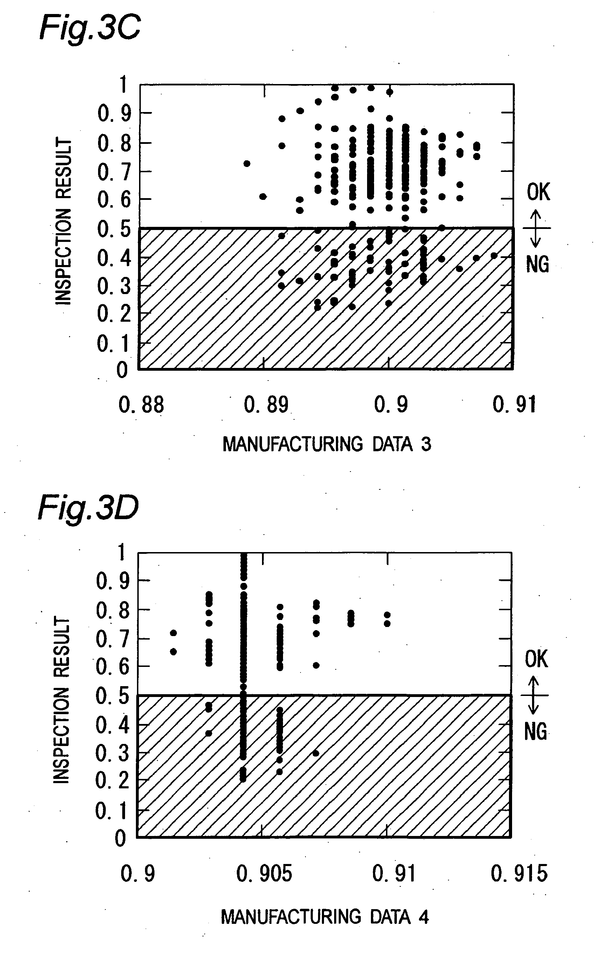

The inventor of the present invention performed the method in JP 2003-114713 A on a production process including manufacturing data ("manufacturing data 1", "manufacturing-data 2" ... "manufacturing data 5") as shown in Fig. 3A to Fig. 3E. Fig. 3A to Fig. 3E are scatter diagrams between the respective manufacturing data 1 to 5 (expressed with values on a horizontal axis) in the production process and inspection results of products manufactured by the production process (expressed with values on a vertical axis). Each article of manufacture is determined as a defective article "NG" if a value of the inspection result is in the range of 0 to 0.5 whereas it is determined as a non-defective article "OK" if the value of the inspection result is over 0.5. In this example, when a value of manufacturing data 1 is in the range of 0.998 to 1, defective articles are often generated. In short, the manufacturing data 1 actually is a generation cause (abnormal factor) of defective articles.

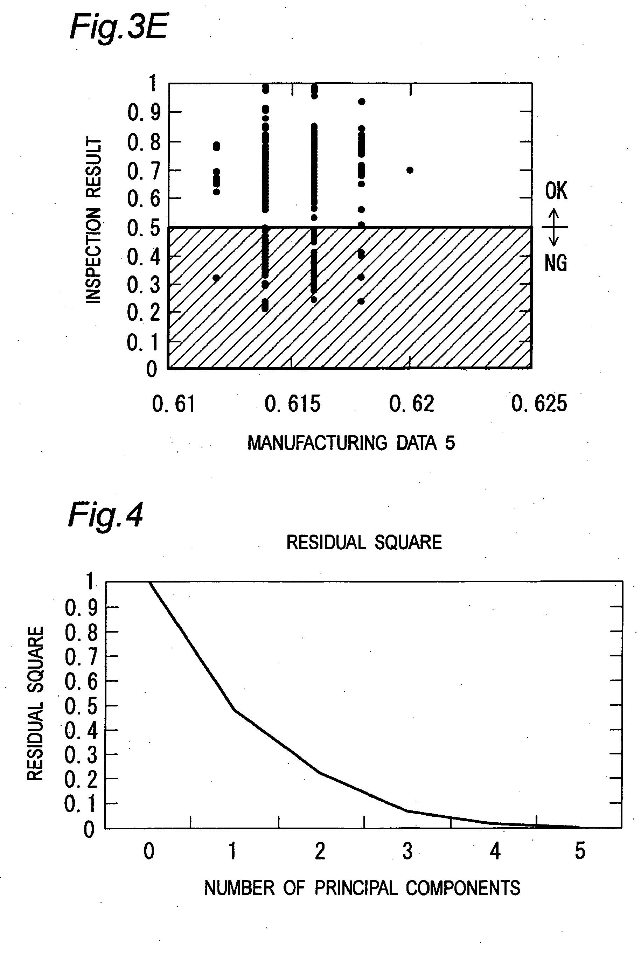

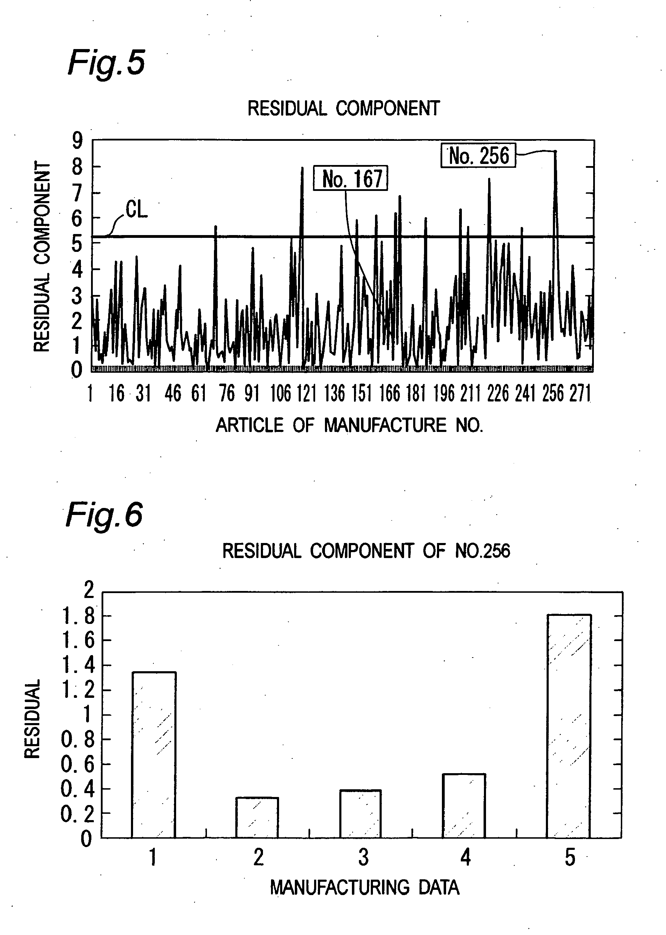

These data are subjected to principal component analysis to obtain a relation between the number of principal components and residual squares obtained by squaring residuals which are modeling errors not expressed in the principal component space. The obtained relation is as shown in Fig. 4. In this case, the number of principal components which causes the residual square to be 25% or less is 2. With the number of principal components to be extracted being set to 2, principal component analysis was conducted and residual calculation was performed. Fig. 5 shows residual values for articles of manufacture, i.e., every individual article of manufacture specified by "Article of manufacture No.". It is to be noted that a straight line CL in Fig. 5 represents a confidence limit of 95%. Residuals of the respective manufacturing data 1 to 5 on an article of manufacture No.256, which has the largest residual in Fig. 5, are as shown in Fig. 6. It is confirmed in this view that the residual in the manufacturing data 5 is the largest. Therefore, the manufacturing data 5 is specified as an abnormal factor of the article of manufacture No.256. However, Fig. 3E (scatter diagram between the manufacturing data 5 and an inspection result) does not show strong correlation between the manufacturing data 5 and the inspection result. This means that the manufacturing data 1, which should essentially be detected as an abnormal factor, was undetectable.

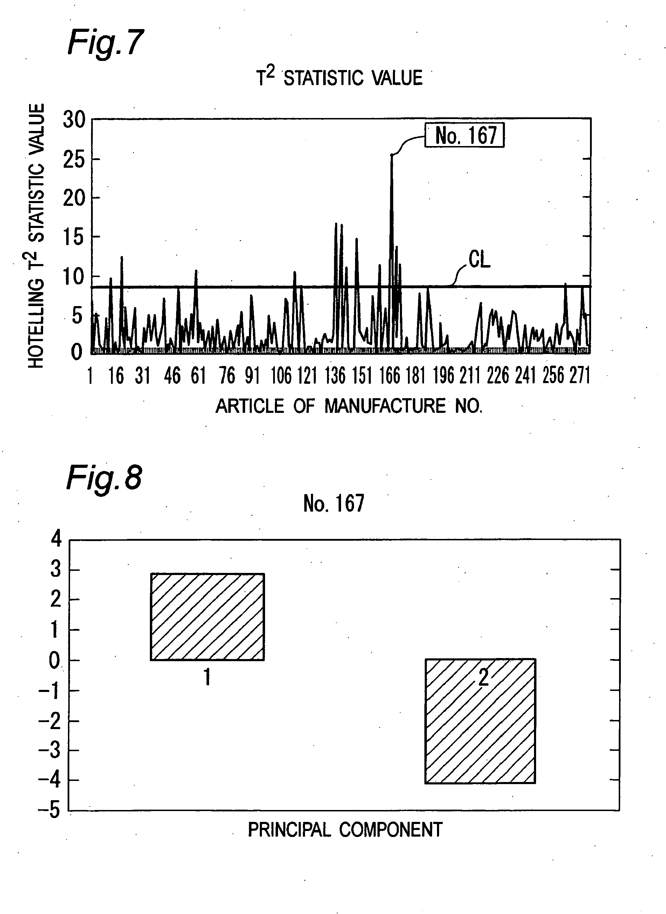

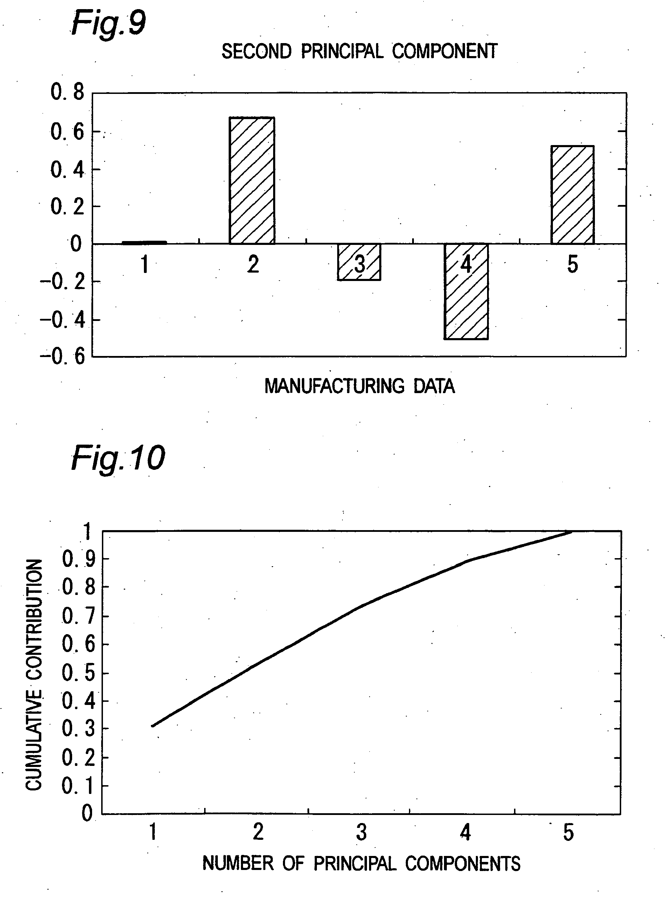

Next, Fig. 7 shows Hotelling $T^2$ statistic values representing a distance from an origin in the principal component space with the extracted each principal components as an axis to a point plotting a manufacturing data set for every article of manufacture in the principal component space. It is to be noted that a straight line CL in Fig. 7 represents a confidence limit of 95%. The view indicates that a value of an article of manufacture No.167 sticks out. A principal component score of the article of manufacture No.167 is as shown in Fig. 8. The view indicates that a principal component having a large contribution to the article of manufacture No.167 is a second principal component. Further, in Fig. 9 which shows contribution of each manufacturing data to the second principal component, the manufacturing data 4 has the same negative sign as the second principal component and has the largest value, so that the manufacturing data 4 is specified as an abnormal factor of the article of manufacture No.167. However, Fig. 3D (scatter diagram between the manufacturing data 4 and an inspection result) does not indicate strong correlation between the manufacturing data 4 and the inspection result. This means that the manufacturing data 1, which should essentially be detected as an abnormal factor, was undetectable.

Thus, it was confirmed that the method of JP 2003-114713 A encountered cases involving difficulty in detection.

Accordingly, an object of the present invention is to provide abnormal factor specifying method and system which allow specification of manufacturing data which causes generation of defective articles with sufficient accuracy.

Another object of the invention is to provide a program for causing a computer to execute such an abnormal factor specifying method.

Still another object of the invention is to provide a computer-readable recording medium with such a program recorded thereon.

SOLUTION TO PROBLEM

The inventor of the present invention analyzed the cases in which the method of JP 2003-114713 A had difficulty in detection as stated below.

That is, in the method of JP 2003-114713 A, manufacturing data with a large influence at the time of defective article manufacturing is specified as an abnormal factor. However, the manufacturing data with a large influence at the time of defective article manufacturing do not necessarily exert direct influence upon generation of defective articles. For example, consider the case where certain manufacturing data A has a very large influence on the result of articles of manufacture. When a defective article is generated due to the manufacturing data A, the manufacturing data A with a large influence is naturally extracted as a candidate of defective article generation factor, and an abnormal factor is provisionally specified. However, if a defective article is generated due to manufacturing data B other than the manufacturing data A, the fact that the manufacturing-data A has a large influence invites a situation in which the manufacturing data B is undetectable. Accordingly, in the method of JP 2003-114713 A, when certain manufacturing data has a large influence and a defective article is generated due to another manufacturing data having a smaller influence, it can be assumed that the manufacturing data, which should essentially be detected as an abnormal factor, is undetectable.

In order to solve the problem, in a first aspect, the present invention is an abnormal factor specifying method for specifying a factor of defective article generation in a production process in which one or more manufacturing steps are performed on articles of manufacture and an inspection step is performed on the articles of manufacture which have undergone the manufacturing steps, wherein

in the production process, one or more kinds of manufacturing data including a manufacturing condition with respect to the articles of manufacture and an inspection result of the inspection are obtained while being associated with each other for every article of manufacture so that it is determined whether the articles of manufacture are non-defective or defective based on the inspection result, the method comprising:

performing principal component analysis to extract at least one feature quantity best expressing a manufacturing condition of articles of manufacture determined to be non-defective from manufacturing data on the articles of manufacture;

in a feature quantity space expressed with the extracted each feature quantity as an axis, calculating a distance between an origin and a point representing the manufacturing data on each article of manufacture as a main significant difference between average manufacturing data at a time of non-defective article manufacturing and each manufacturing data at a time of defective article manufacturing;

calculating a contribution ratio of each manufacturing data in the main significant difference as each main influence; and

specifying manufacturing data with the main influence at the time of defective article manufacturing being substantially increased from that at the time of non-defective article manufacturing, as an abnormal factor from the manufacturing data.

The word "feature quantity best expressing a manufacturing condition of articles of manufacture" is herein equivalent to a principal component obtained by principal component analysis.

The word "in a feature quantity space ⋯ a distance between an origin and a point representing the manufacturing data on each article of manufacture" is herein equivalent to, for example, Hotelling $T^2$ statistic value.

The phrase that the main influence "being substantially increased" means that a significant difference of increase is present.

In the abnormal factor specifying method of the invention, manufacturing data with the main influence at the time of defective article manufacturing being substantially increased from that at the time of non-defective article manufacturing is specified as an abnormal factor from the manufacturing data. Therefore, manufacturing data, in which a main influence itself is not so large at the time of defective article generation but the main influence at the time of defective article manufacturing is significantly increased from that at the time of non-defective article manufacturing, can be specified as an abnormal factor from the manufacturing data. Therefore, the manufacturing data which should essentially be detected as an abnormal factor can be detected out of a huge number of manufacturing data, and the manufacturing data which causes defective article generation can be specified with sufficient accuracy.

As a result, in the production process for performing one or more manufacturing steps on articles of manufacture, an operator (including maintenance personnel) can immediately take a measure for improving the manufacturing steps. Therefore, enhanced productive efficiency is achieved.

In order to specify the manufacturing data which is an abnormal factor, a viewpoint with respect to the degree of the main influence itself at the time of defective article generation may be added to a viewpoint that the main influence at the time of defective article manufacturing is substantially increased from that at the time of non-defective article manufacturing.

In a second aspect, the present invention is an abnormal factor specifying method for specifying a factor of defective article generation in a production process in which one or more manufacturing steps are performed on articles of manufacture and an inspection step is performed on the articles of manufacture which have undergone the manufacturing steps, wherein

in the production process, one or more kinds of manufacturing data including a manufacturing condition for the articles of manufacture and an inspection result of the inspection are obtained while being associated with each other for every article of manufacture so that it is determined whether the articles of manufacture are non-defective or defective based on the inspection result, the method comprising:

performing principal component analysis to extract at least one feature quantity best expressing a manufacturing condition of articles of manufacture determined to be non-defective from manufacturing data on the articles of manufacture;
calculating a residual component, which is not expressed in a feature quantity space expressed with the each feature quantity as an axis, as a sub significant difference for every article of manufacture;
calculating a contribution ratio of each manufacturing data in the sub significant difference as each sub influence; and
specifying manufacturing data with the sub influence at the time of defective article manufacturing being substantially increased from that at the time of non-defective article manufacturing, as an abnormal factor from the manufacturing data.

In the abnormal factor specifying method of the invention, manufacturing data with the sub influence at the time of defective article manufacturing being substantially increased from that at the time of non-defective article manufacturing is specified as an abnormal factor from the manufacturing data. Therefore, manufacturing data, in which a sub influence itself is not so large at the time of defective article generation but the sub influence at the time of defective article manufacturing is significantly increased from that at the time of non-defective article manufacturing, can be specified as an abnormal factor from the manufacturing data. Therefore, the manufacturing data which should essentially be detected as an abnormal factor can be detected out of a huge number of manufacturing data, and the manufacturing data which causes defective article generation can be specified with sufficient accuracy.

As a result, in the production process for performing one or more manufacturing steps on articles of manufacture, an operator (including maintenance personnel) can immediately take a measure for improving the manufacturing steps. Therefore, enhanced productive efficiency is achieved.

One embodiment of the abnormal factor specifying method comprises:

calculating a residual component, which is not expressed in the feature quantity space expressed with the each feature quantity as an axis, as a sub significant difference for every article of manufacture;
calculating a contribution ratio of each manufacturing data in the sub significant difference as each sub influence; and
specifying manufacturing data with the sub influence as well as the main influence at the time of defective article manufacturing being substantially increased more than those at the time of non-defective article manufacturing, as an abnormal factor from the manufacturing data.

In the abnormal factor specifying method in this one embodiment, manufacturing data with the sub influence as well as the main influence at the time of defective article manufacturing being substantially increased from those at the time of non-defective article manufacturing is specified as an abnormal factor from the manufacturing data. Therefore, the manufacturing data which causes defective article generation can be specified with more sufficient accuracy.

One embodiment of the abnormal factor specifying method comprises:

with respect to articles of manufacture determined to be non-defective, dividing each cumulative total value which is obtained by totaling the main influences for every manufacturing data, by a sum total produced by totaling the main influences of all the associated manufacturing data, to obtain a main influence normalized value of the non-defective articles which expresses the main influence for each of the manufacturing data, while
with respect to articles of manufacture determined to be defective, dividing each cumulative total value which is obtained by totaling the main influences for every manufacturing data, by a sum total produced by totaling the main influences of all the associated manufacturing data, to obtain a main influence normalized value of the defective articles which expresses the main influence for each of the manufacturing data; and
with respect to each of the manufacturing data, comparing the main influence normalized value of the non-defective articles with the main influence normalized value of the defective articles, to specify manufacturing data which is the abnormal factor.

When a main influence with respect to manufacturing-data $j$ on an article of manufacture $i$ determined to be non-defective is defined as shown below:

Math. 3

$$C_{ij}^{[T2]}$$

a main influence normalized value of the non-defective articles is expressed as follows:

Math. 4

$$\sum_i C_{ij}^{[T2]} \Big/ \sum_{i,j} C_{ij}^{[T2]}$$

When a main influence with respect to manufacturing-data j on an article of manufacture i determined to be defective is defined as shown below:

Math. 5

$$C_{ij}^{\prime[T2]}$$

a main influence normalized value of the defective articles is expressed as follows:

Math. 6

$$\sum_i C_{ij}^{\prime[T2]} \Big/ \sum_{i,j} C_{ij}^{\prime[T2]}$$

In the abnormal factor specifying method of this one embodiment, it becomes possible to compare the main influences of articles of manufacture determined to be non-defective and articles of manufacture determined to be defective by the size of their ratios in all the manufacturing data. Consequently, in the case where the number of articles of manufacture determined to be non-defective and the number of articles of manufacture determined to be defective are different, the manufacturing data which causes defective article generation can be specified with sufficient accuracy.

One embodiment of the abnormal factor specifying method comprises:

with respect to articles of manufacture determined to be non-defective, dividing each cumulative total value which is obtained by totaling the sub influences for every manufacturing data, by a sum total produced by totaling the sub influences of all the associated manufacturing data, to obtain a sub influence normalized value of the non-defective articles which expresses the sub influence for each of the manufacturing data, while
with respect to articles of manufacture determined to be defective, dividing each cumulative total value which is obtained by totaling the sub influences for every manufacturing data, by a sum total produced by totaling the sub influences of all the associated manufacturing data, to obtain a sub influence normalized value of the defective articles which expresses the sub influence for each of the manufacturing data; and
with respect to each of the manufacturing data, comparing the sub influence normalized value of the non-defective articles with the sub influence normalized value of the defective articles, to specify manufacturing data which is the abnormal factor.

When a sub influence with respect to manufacturing-data j on an article of manufacture i determined to be non-defective is defined as shown below:

Math. 7

$$C_{ij}^{[Q]}$$

a sub influence normalized value of the non-defective articles is expressed as follows:

Math. 8

$$\sum_i C_{ij}^{[Q]} \Big/ \sum_{i,j} C_{ij}^{[Q]}$$

When a sub influence with respect to manufacturing-data j on an article of manufacture i determined to be defective is defined as shown below:

Math. 9

$$C_{ij}'^{[Q]}$$

a sub influence normalized value of the defective articles is expressed as follows:

Math. 10

$$\sum_i C_{ij}'^{[Q]} \Big/ \sum_{i,j} C_{ij}'^{[Q]}$$

In the abnormal factor specifying method of this one embodiment, it becomes possible to compare the sub influences of the articles of manufacture determined to be non-defective and the articles of manufacture determined to be defective by the size of their ratios in all the manufacturing data. Consequently, in the case where the number of articles of manufacture determined to be non-defective and the number of articles of manufacture determined to be defective are different, the manufacturing data which causes defective article generation can be specified with sufficient accuracy.

One embodiment of the abnormal factor specifying method comprises:

with respect to articles of manufacture determined to be defective, dividing each cumulative total value which is obtained by totaling the main influences for every manufacturing data, by a number of the articles of manufacture determined to be defective, and averaging resultant values, to obtain a main influence average value of the defective articles which expresses an average value of the main influences with respect to each of the manufacturing data, while with respect to articles of manufacture determined to be non-defective, dividing each cumulative total value which is obtained by totaling the main influences for every manufacturing data, by a number of the articles of manufacture determined to be non-defective, and averaging resultant values, to obtain a main influence average value of the non-defective articles which expresses an average value of the main influences with respect to each of the manufacturing data;

with respect to the articles of manufacture determined to be defective, dividing each cumulative total value which is obtained by totaling the sub influences for every manufacturing data, by the number of the articles of manufacture determined to be defective, and averaging resultant values, to obtain a sub influence average value of the defective articles which expresses an average value of the sub influences with respect to each of the manufacturing data, while with respect to the articles of manufacture determined to be non-defective, dividing each cumulative total value which is obtained by totaling the sub influences for every manufacturing data, by the number of the articles of manufacture determined to be non-defective, and averaging resultant values, to obtain a sub influence average value of the non-defective articles which expresses an average value of the sub influences with respect to each of the manufacturing data; and

specifying manufacturing data which is the abnormal factor, based on a ratio between the main influence average value of the defective articles and the main influence average value of the non-defective articles and a ratio between the sub influence average value of the defective articles and the sub influence average value of the non-defective articles with respect to each of the manufacturing data.

When a main influence with respect to manufacturing-data j on an article of manufacture i determined to be defective is defined as shown below:

$$\text{Math. 11}$$

$$C_{ij}'^{[T2]}$$

and when the number of articles of manufacture determined to be defective is N', a main influence average value of the defective articles is expressed as follows:

$$\text{Math. 12}$$

$$\sum_i C_{ij}'^{[T2]} \Big/ N'$$

When a main influence of manufacturing-data j on an article of manufacture i determined to be non-defective is expressed as:

$$\text{Math. 13}$$

$$C_{ij}^{[T2]}$$

and when the number of articles of manufacture determined to be non-defective is N, a main influence average value of the non-defective articles is expressed as follows:

$$\text{Math. 14}$$

$$\sum_i C_{ij}^{[T2]} \Big/ N$$

In this case, a ratio between the main influence average value of the defective articles and the main influence average value of the non-defective articles is expressed, for example, as follows:

$$\text{Math. 15}$$

$$\frac{\sum_i C_{ij}'^{[T2]} \Big/ N'}{\sum_i C_{ij}^{[T2]} \Big/ N}$$

The sub influence average value of the defective articles, the sub influence average value of the non-defective articles, and a ratio between the sub influence average value of the defective articles and the sub influence average value of the non-defective articles are also expressed by similar equations equivalent to (Math 11) to (Math 15).

In the abnormal factor specifying method of this one embodiment, it becomes possible to easily specify the manufacturing data whose main influence and/or sub influence change most at the time of defective article manufacturing. With this method, the manufacturing data which causes defective article generation can be specified with sufficient accuracy.

One embodiment of the abnormal factor specifying method comprises:

standardizing the main influence for every manufacturing data with respect to articles of manufacture determined to be defective with use of an average value obtained by averaging the main influences with respect to the articles of manufacture determined to be non-defective for all the associated manufacturing data and with use of a standard deviation of the main influences obtained for all the associated manufacturing data on the articles of manufacture determined to be non-defective, to obtain a main influence standardized value for every manufacturing data, while standardizing the sub influence for every manufacturing data with respect to articles of manufacture determined to be defective with use of an average value obtained by averaging the sub influences with respect to the articles of manufacture determined to be non-defective for all the associated manufacturing data and with use of a standard deviation of the sub influences obtained for all the associated manufacturing data on the articles of manufacture determined to be non-defective, to obtain a sub influence standardized value for every manufacturing data; and specifying manufacturing data which is the abnormal factor based on the main influence standardized value and the sub influence standardized value.

When a main influence with respect to manufacturing-data j on an article of manufacture i determined to be defective is defined as shown below:

Math. 16

$$C_{ij}'^{[T2]}$$

and when an average value obtained by averaging the main influences with respect to the articles of manufacture determined to be non-defective for all the associated manufacturing data is defined as:

Math. 17

$$\overline{C}_j$$

and when a standard deviation of the main influences obtained for all the associated manufacturing data with respect to the articles of manufacture determined to be non-defective is defined as:

Math. 18

$$std(C_j)$$

then, a main influence standardized value for every manufacturing data is expressed as follows:

Math. 19

$$\sum_{i=1}^{n'} \left( C_{ij}'^{[T2]} - \overline{C}_j \right) \Big/ std(C_j)$$

The sub influence standardized value for every manufacturing data is also expressed by similar equations equivalent to (Math 16) to (Math 19).

In the abnormal factor specifying method of this one embodiment, the manufacturing data which is the abnormal factor is specified based on the main influence standardized value and the sub influence standardized value, so that the influence in each manufacturing data with respect to the articles of manufacture determined to be defective can be compared with sufficient accuracy in the scale of the influence of each manufacturing data at the time of non-defective article manufacturing. Therefore, the manufacturing data which causes defective article generation can be specified with more sufficient accuracy.

The present invention is an abnormal factor specifying system for specifying a factor of defective article generation in a production process in which one or more manufacturing steps are performed on articles of manufacture and an inspection step is performed on the articles of manufacture which have undergone the manufacturing steps, wherein in the production process, one or more kinds of manufacturing data including a manufacturing condition with respect to the articles of manufacture and an inspection result of the inspection are obtained while being associated with each other for every article of manufacture so that it is determined whether the articles of manufacture are non-defective or defective based on the inspection result, the system comprising:

a storage section for associating and storing the manufacturing data and the inspection result in the inspection process for every article of manufacture; and
an abnormal factor specifying section for performing the abnormal factor specifying method as claimed in Claim 1 or 2 with use of a memory content of the storage section.

In the abnormal factor specifying system of thy invention, a storage section associates and stores the manufacturing data and the inspection result of the inspection process for every article of manufacture. The abnormal factor specifying section performs the abnormal factor specifying method as claimed in Claim 1 or 2 with use of a memory content of the storage section. Therefore, the manufacturing data which should essentially be detected as an abnormal factor can be detected out of a huge number of manufacturing data, and the manufacturing data which causes defective article generation can be specified with sufficient accuracy.

As a result, in the production process for performing one or more manufacturing steps on articles of manufacture, an operator (including maintenance personnel) can immediately take a measure for improving the manufacturing steps. Therefore, enhanced productive efficiency is achieved.

The present invention is an abnormal factor specifying program for causing a computer to execute the abnormal factor specifying method in the first aspect or the second aspect of the invention.

According to the abnormal factor specifying program of the invention, it becomes possible to cause a computer to execute the abnormal factor specifying method of the first aspect or the second aspect of the invention.

The present invention is a computer-readable recording medium with the abnormal factor specifying program of the above invention recorded thereon.

According to the recording medium of the invention, by causing a computer to read a record content of the recording medium, the computer becomes possible to execute the abnormal factor specifying method in the first aspect or the second aspect of the invention.

BRIEF DESCRIPTION OF DRAWINGS

Fig. 1 is a view showing a general flow of an abnormal factor specifying method in one embodiment of the invention;
Fig. 2 is a block diagram showing a configuration of an abnormal factor specifying system in one embodiment of the invention;
Fig. 3A is a view showing analysis object data in the abnormal factor specifying method;
Fig. 3B is a view showing analysis object data in the abnormal factor specifying method;
Fig. 3C is a view showing analysis object data in the abnormal factor specifying method;
Fig. 3D is a view showing analysis object data in the abnormal factor specifying method;
Fig. 3E is a view showing analysis object data in the abnormal factor specifying method;
Fig. 4 is a view showing a relation between the number of principal components and residual squares with respect to analysis object data from Fig. 3A to Fig. 3E;
Fig. 5 is a view showing residual values with respect to analysis object data from Fig. 3A to Fig. 3E for every article of manufacture;
Fig. 6 is a view showing residuals for every manufacturing data in an article of manufacture No. 256 shown in Fig. 5;
Fig. 7 is a view showing Hotelling $T^2$ statistic values with respect to analysis object data from Fig. 3A to Fig. 3E;

Fig. 8 is a view showing contribution of each principal component to T² statistic value with respect to an article of manufacture No. 167 shown in Fig. 7;

Fig. 9 is a view showing contribution of each manufacturing data to a second principal component shown in Fig. 8;

Fig. 10 is a view showing a relation between a number of principal components and cumulative contributions of the principal components with respect to manufacturing data shown in Fig. 3A to Fig. 3E;

Fig. 11 is a view showing results obtained by accumulating main influences for every manufacturing data shown in Fig. 3A to Fig. 3E with respect to articles of manufacture determined to be non-defective and articles of manufacture determined to be defective; and

Fig. 12 is a view showing an increase rate of the main influence of each manufacturing data at the time of the defective article manufacturing from that at the time of non-defective article manufacturing with respect to the manufacturing data shown in Fig. 3A to Fig. 3E.

DESCRIPTION OF EMBODIMENTS

Hereinbelow, the present invention will be described in detail in conjunction with embodiments with reference to the drawings.

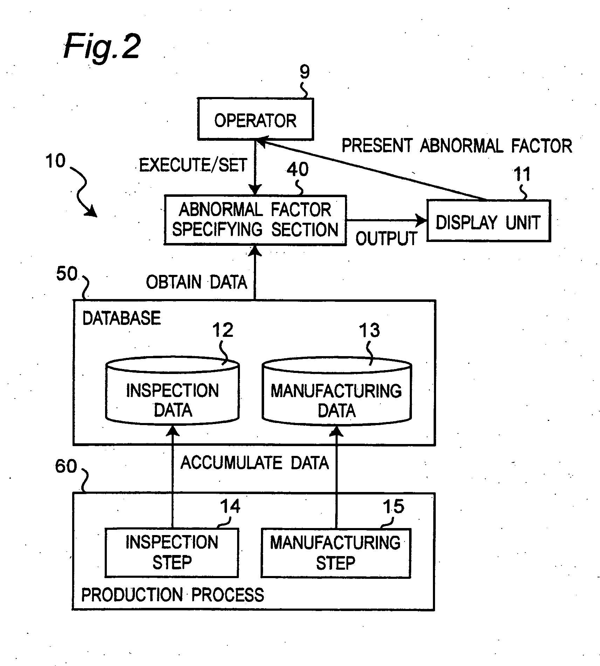

Fig. 2 shows a block configuration of an abnormal factor specifying system (denoted by reference sign 10 as a whole) in one embodiment of the invention for specifying a factor of defective article generation in a semiconductor production process 60.

The semiconductor production process 60 is structured to perform one or more manufacturing steps 15 on articles of manufacture (wafers in this example) and to perform inspection processes 14 including quality determination with respect to the articles of manufacture which have undergone the manufacturing step 15.

The abnormal factor specifying system 10 is composed of a database 50 as a storage section, an abnormal factor specifying section 40, and a display unit 11 for displaying a processing result by the abnormal factor specifying section 40.

The database 50 obtains one or more kinds of manufacturing data 13 including a manufacturing condition with respect to articles of manufacture for every article of manufacture from each manufacturing step 15 of the semiconductor production process 60, and also obtains inspection data 12 representing an inspection result (including a result of quality determination) of the articles of manufacture from each inspection process 14. For every article of manufacture, the manufacturing data 13 and the inspection data 12 with respect to the articles of manufacture are stored while being associated (linked) with each other. The database 50 is constituted by, for example, a publicly known hard disk drive apparatus.

The abnormal factor specifying section 40 performs a later-described abnormal factor specifying method using the manufacturing data 13 and the inspection data 12 accumulated in the database 50 to specify manufacturing data which is a cause (abnormal factor) of defective article generation. The abnormal factor specifying section 40 is constituted by a computer which executes arithmetic processing according to software (program) in this example. The content of processing and a processing result by the abnormal factor specifying section 40 are outputted to a display unit 11.

The display unit 11, which is constituted by, for example, an LCD (Liquid Crystal Display) or a CRT (Cathode-Ray Tube), displays information outputted by the abnormal factor specifying section 40.

An operator 9 can instruct execution of processing to the abnormal factor specifying section 40 and set up processing conditions while watching a screen displayed on the display unit 11.

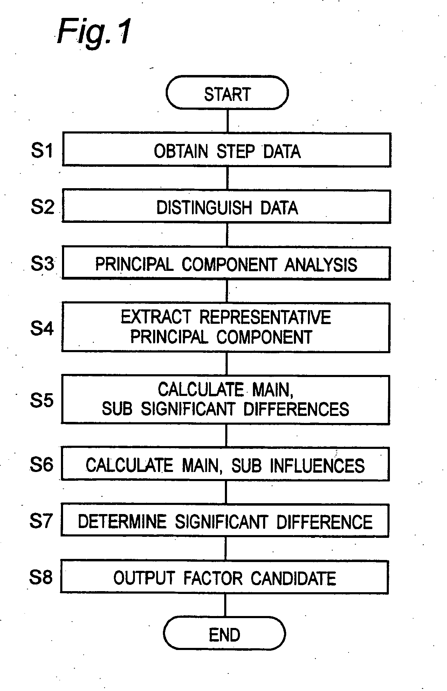

Fig. 1 shows a general flow of abnormal factor specifying processing executed by the abnormal factor specifying section 40.

In Step S1, the abnormal factor specifying section 40 obtains the manufacturing data 13 and the inspection data 12 accumulated in the database 50. In the obtained data group, the manufacturing data 13 and the inspection data 12 on articles of manufacture are associated with each other for every article of manufacture as mentioned before.

Next, the obtained data group is distinguished between data on non-defective articles and data on defective articles based on the inspection results included in the inspection data 12 (Step S2). Distinction of non-defective articles and defective articles is made with use of an upper control limit value and a lower control limit value or statistic values such as 10% values and 90% values set by the operator as thresholds. Articles of manufacture having a value of inspection result within a threshold are determined as non-defective, whereas articles of manufacture having a value of inspection result out of a threshold is determined as defective. It is to be noted that method for distinguishing non-defective and defective articles shown here may be replaced with other methods.

Next, principal component analysis is performed to extract a plurality of principal components from manufacturing data on articles of manufacture determined to be non-defective as feature quantities best expressing a manufacturing condition of the articles of manufacture (Step S3). In the principal component analysis, a standardization for every manufacturing data is performed so as to have a mean of 0 and a variance of 1, and then a manufacturing data set X in N rows and M columns is decomposed as follows:

Math. 20

$$X = TV^T + E$$

In this case, N represents the number of articles of manufacture and M represents the number of manufacturing data. T is an orthogonal matrix of $N \times R$ representing a principal component score matrix, and V is a normalized orthogonal matrix of $M \times R$ referred to as an addition amount matrix. A superscript "T" represents a transposed matrix. R represents the number of principal components to be extracted. E is equivalent to a residual variable which is not expressed by an extracted principal component model.

Next, among the principal components obtained by principal component analysis, at least one principal component which should be used for analysis is extracted out of principal components with a large contribution to original data before principal component analysis (Step S4). In this case, the number of principal components to be extracted is made to be the minimum number that satisfies a preset required cumulative contribution rate of principal component. In a principal component space with the extracted each principal component (referred to as a "representative principal component") as an axis, an origin represents an average manufacturing data set at the time of non-defective article manufacturing.

Next, in Step S5, in the feature quantity space expressed with the each representative principal component as an axis, a distance between an origin and a point representing the manufacturing data on each article of manufacture is calculated as a main significant difference between average manufacturing data at the time of non-defective article manufacturing and each manufacturing data at the time of defective article manufacturing. A residual component, which is not expressed in the feature quantity space expressed with the each representative principal component as an axis, is calculated as a sub significant difference for every article of manufacture.

In this case, the main significant difference $T^2$ is calculated by the following (Math 21):

Math. 21

$$T^2 = \sum_{r=1}^{R} \frac{t_r^2}{\sigma_{tr}^2}$$

wherein $t_r$ represents the r-th principal component score, and $\sigma_{tr}$ represents a standard deviation of the r-th principal component score.

A sub significant difference Q is calculated by the following (Math 22):

Math. 22

$$Q = \sum_{p=1}^{P} (x_p - \hat{x}_p)^2$$

In this equation, $x_p$ is a partial matrix of the manufacturing data set X, and expresses manufacturing data on the p-th variable, and

Math. 23

$$\hat{x}_p$$

expresses an estimate value of $x_p$.

Next, in Step S6, a contribution ratio of each manufacturing data in the main significant difference is each calculated as a main influence. A contribution ratio of each manufacturing data in the sub significant difference is each calculated as a sub influence.

In this case, main influence and sub influence are calculated by the following (Math 24) and (Math 25), respectively.

Math. 24

$$\text{MAIN INFLUENCE}: \quad C_p^{[T2]} = t \sum\nolimits_T^{-1} x_p v_p$$

wherein t represents a principal component score and $v_p$ represents a loading vector which is a coefficient between the principal component score and original data.

Math. 25

$$\text{SUB INFLUENCE}: \quad C_p^{[Q]} = \left(x_p - \hat{x}_p\right)^2$$

Next, in Step S7, manufacturing data with a large main influence at the time of defective article generation is selected as an abnormal factor candidate out of the manufacturing data. Manufacturing data with the main influence at the time of defective article manufacturing being substantially increased from that at the time of non-defective article manufacturing is also selected as an abnormal factor candidate. Alternatively, manufacturing data with the sub influence at the time of defective article manufacturing being substantially increased from that at the time of non-defective article manufacturing is selected as an abnormal factor candidate. Alternatively, manufacturing data with the main influence at the time of the defective article manufacturing being substantially increased from that at the time of non-defective article manufacturing and with the sub influence at the time of the defective article manufacturing being substantially increased from that at the time of non-defective article manufacturing is selected as an abnormal factor candidate. The phrase that the main influence and the sub influence "being substantially increased" means that a significant difference of increase is present.

Next, the specified manufacturing data is outputted as an abnormal factor candidate (Step S8).

In such a case, manufacturing data, in which the main influence and the sub influence themselves are not so large at the time of defective article generation but the main influence and/or the sub influence at the time of defective article manufacturing are significantly increased from those at the time of non-defective article manufacturing, can be specified as an abnormal factor from the manufacturing data. Therefore, the manufacturing data which should essentially be detected as an abnormal factor can be detected out of a huge number of manufacturing data, and the manufacturing data which causes defective article generation can be specified with sufficient accuracy.

As a result, in the production process for performing one or more manufacturing steps on articles of manufacture, an operator (including maintenance personnel) can immediately take a measure for improving the manufacturing steps. Therefore, enhanced productive efficiency is achieved.

Description is now given of some specific abnormal factor specifying methods.

(1) Method using normalization value of main influence

In this method, first, with respect to articles of manufacture determined to be non-defective, each cumulative total value which is obtained by totaling the main influences for every manufacturing data, is divided by a sum total produced by totaling the main influences of all the associated manufacturing data, to obtain a main influence normalized value of the non-defective articles which expresses the main influence for each of the manufacturing data. With respect to articles of manufacture determined to be defective, each cumulative total value which is obtained by totaling the main influences for every manufacturing data, is divided by a sum total produced by totaling the main influences of all the associated manufacturing data, to obtain a main influence normalized value of the defective articles which expresses the main influence for each of the manufacturing data. Then, with respect to each of the manufacturing data, the main influence normalized value of the non-defective articles is compared with the main influence normalized value of the defective articles, to specify manufacturing data which is the abnormal factor.

When a main influence with respect to manufacturing-data j on an article of manufacture i determined to be non-defective is defined as shown below:

Math. 26

$$C_{ij}^{[T2]}$$

a main influence normalized value of the non-defective articles is expressed as follows:

Math. 27

$$\sum_i C_{ij}^{[T2]} \bigg/ \sum_{i,j} C_{ij}^{[T2]}$$

When a main influence with respect to manufacturing-data j on an article of manufacture i determined to be defective is defined as shown below:

Math. 28

$$C_{ij}'^{[T2]}$$

a main influence normalized value of the defective articles is expressed as follows:

Math. 29

$$\sum_i C_{ij}'^{[T2]} \bigg/ \sum_{i,j} C_{ij}'^{[T2]}$$

In this method, it becomes possible to compare the main influences of articles of manufacture determined to be non-defective and articles of manufacture determined to be defective by the size of their ratios in all the manufacturing data. Consequently, in the case where the number of articles of manufacture determined to be non-defective and the number of articles of manufacture determined to be defective are different, the manufacturing data which causes defective article generation can be specified with sufficient accuracy.

(2) Method using normalized value of sub influence

In this method, first, with respect to articles of manufacture determined to be non-defective, each cumulative total value which is obtained by totaling the sub influences for every manufacturing data, is divided by a sum total produced by totaling the sub influences of all the associated manufacturing data, to obtain a sub influence normalized value of the non-defective articles which expresses the sub influence for each of the manufacturing data. With respect to articles of manufacture determined to be defective, each cumulative total value which is obtained by totaling the sub influences for every manufacturing data, is divided by a sum total produced by totaling the sub influences of all the associated manufacturing data, to obtain a sub influence normalized value of the defective articles which expresses the sub influence for each of the manufacturing data.

With respect to each of the manufacturing data, the sub influence normalized value of the non-defective articles is compared with the sub influence normalized value of the defective articles, to specify manufacturing data which is the abnormal factor.

When a sub influence with respect to manufacturing-data j on an article of manufacture i determined to be non-defective is defined as shown below:

Math. 30

$$C_{ij}^{[\varrho]}$$

a sub influence normalized value of the non-defective articles is expressed as follows:

Math. 31

$$\sum_i C_{ij}^{[\varrho]} \bigg/ \sum_{i,j} C_{ij}^{[\varrho]}$$

When a sub influence with respect to manufacturing-data j on an article of manufacture i determined to be defective is defined as shown below:

Math. 32

$$C_{ij}'^{[\varrho]}$$

a sub influence normalized value of the defective articles is expressed as follows:

Math. 33

$$\sum_i C_{ij}'^{[\varrho]} \bigg/ \sum_{i,j} C_{ij}'^{[\varrho]}$$

In this method, it becomes possible to compare the sub influences of the articles of manufacture determined to be non-defective and the articles of manufacture determined to be defective by the size of their ratios in all the manufacturing data. Consequently, in the case where the number of articles of manufacture determined to be non-defective and the number of articles of manufacture determined to be defective are different, the manufacturing data which causes defective article generation can be specified with sufficient accuracy.

(3) Method using ratio between main influence average value of defective articles and main influence average value of non-defective articles

In this method, first, with respect to articles of manufacture determined to be defective, each cumulative total value which is obtained by totaling the main influences for every manufacturing data, is divided by a number of the articles of manufacture determined to be defective, and resultant values are averaged to obtain a main influence average value of the defective articles which expresses an average value of the main influences with respect to each of the manufacturing data. At the same time, with respect to articles of manufacture determined to be non-defective, each cumulative total value which is obtained by totaling the main influences for every manufacturing data, is divided by a number of the articles of manufacture determined to be non-defective, and resultant values are averaged to obtain a main influence average value of the non-defective articles which expresses an average value of the main influences with respect to each of the manufacturing data. With respect to articles of manufacture determined to be defective, each cumulative total value which is obtained by totaling the sub influences for every manufacturing data, is divided by the number of the articles of manufacture determined to be defective, and resultant values are averaged to obtain a sub influence average value of the defective articles which expresses an average value of the sub influences with respect to each of the manufacturing data. At the same time, with respect to articles of manufacture determined to be non-defective, each cumulative total value which is obtained by totaling the sub influences for every manufacturing data, is divided by the number of the articles of manufacture determined to be non-defective, and resultant values are averaged to obtain a sub influence average value of the non-defective articles which expresses an average value of the sub influences with respect to each of the manufacturing data. Manufacturing data which is the abnormal factor is specified from each of the manufacturing data based on a ratio between the main influence average value of the defective articles and the main influence average value of the non-defective articles and a ratio between the sub influence average value of the defective articles and the sub influence average value of the non-defective articles.

When a main influence with respect to manufacturing-data j on an article of manufacture i determined to be defective is defined as shown below:

Math. 34

$$C_{ij}^{\prime[T2]}$$

and when the number of articles of manufacture determined to be defective is N', a main influence average value of the defective articles is expressed as follows:

Math. 35

$$\sum_{i} C_{ij}^{\prime[T2]} \Big/ N'$$

When a main influence of manufacturing-data j on an article of manufacture i determined to be non-defective is expressed as:

Math. 36

$$C_{ij}^{[T2]}$$

and when the number of articles of manufacture determined to be non-defective is N, a main influence average value of the non-defective articles is expressed as follows:

Math. 37

$$\sum_{i} C_{ij}^{[T2]} \Big/ N$$

In this case, a ratio between the main influence average value of the defective articles and the main influence average value of the non-defective articles is expressed, for example, as follows:

Math. 38

$$\frac{\sum_{i} C_{ij}^{\prime[T2]} \Big/ N'}{\sum_{i} C_{ij}^{[T2]} \Big/ N}$$

The sub influence average value of the defective articles, the sub influence average value of the non-defective articles, and a ratio between the sub influence average value of the defective articles and the sub influence average value of the non-defective articles are also expressed by similar equations equivalent to (Math 34) to (Math 38).

In this method, it becomes possible to easily specify the manufacturing data whose main influence and/or sub influence change most at the time of defective article manufacturing. With this method, the manufacturing data which causes defective article generation can be specified with sufficient accuracy.

(4) Method using standardized value of main influence and standardized value of sub influence

In this method, first, the main influence for every manufacturing data with respect to articles of manufacture determined to be defective is standardized with use of an average value obtained by averaging the main influences with respect to articles of manufacture determined to be non-defective for all the associated manufacturing data and with use of a standard deviation of the main influences obtained for all the associated manufacturing data on the articles of manufacture determined to be non-defective, to obtain a main influence standardized value for every manufacturing data. The sub influence for every manufacturing data with respect to the articles of manufacture determined to be defective is standardized with use of an average value obtained by averaging the sub influences with respect to the articles of manufacture determined to be non-defective for all the associated manufacturing data and with use of a standard deviation of the sub influences obtained for all the associated manufacturing data on the articles of manufacture determined to be non-defective, to obtain a sub influence standardized value for every manufacturing data. Then, manufacturing data which is the abnormal factor is specified based on the main influence standardized value and the sub influence standardized value.

When a main influence with respect to manufacturing-data j on an article of manufacture i determined to be defective is defined as shown below:

Math. 39

$$C_{ij}^{\prime[T2]}$$

and when an average value obtained by averaging the main influences with respect to articles of manufacture determined to be non-defective for all the associated manufacturing data is defined as:

Math. 40

$$\overline{C}_j$$

and when a standard deviation of the main influences obtained for all the associated manufacturing data with respect to the articles of manufacture determined to be non-defective is defined as:

Math. 41

$$std(C_j)$$

then, a main influence standardized value for every manufacturing data is expressed as follows:

Math. 42

$$\sum_{i=1}^{n'} \left( C_{ij}^{\prime[T2]} - \overline{C}_j \right) \bigg/ std(C_j)$$

In this method, manufacturing data which is the abnormal factor is specified based on the main influence standardized value and the sub influence standardized value, so that the influence in each manufacturing data with respect to the articles of manufacture determined to be defective can be compared with sufficient accuracy in the scale of the influence of each manufacturing data at the time of non-defective' article manufacturing. Therefore, the manufacturing data which causes defective article generation can be specified with more sufficient accuracy.

Next, actual analysis was performed on manufacturing data shown in Fig. 3A to Fig. 3E by the abnormal factor specifying method (1) (i.e., the method using normalized value of main influence).

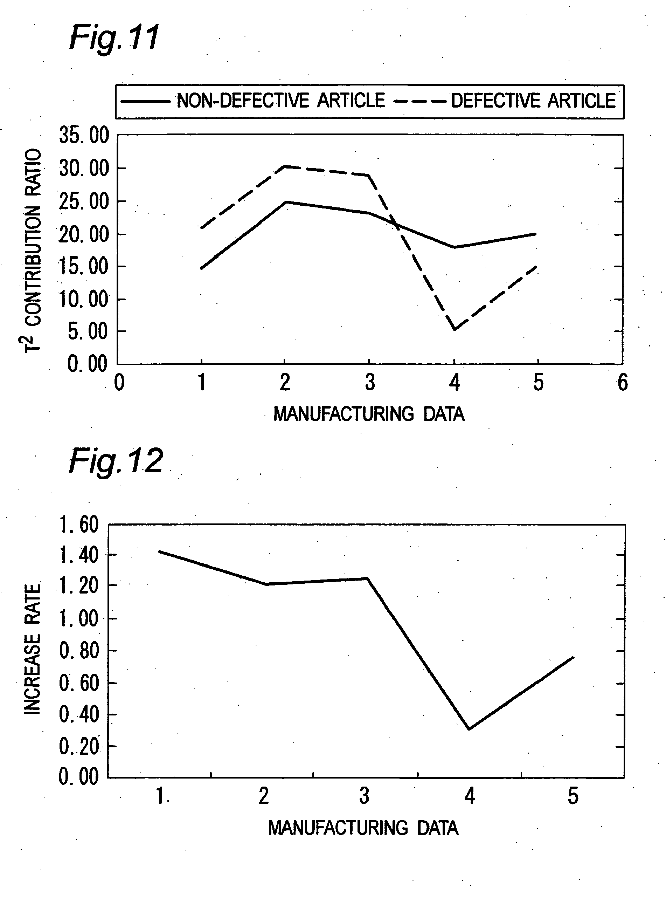

Fig. 10 is a view showing a relation between the number of principal components and cumulative contributions of the principal components with respect to the manufacturing data shown in Fig. 3A to Fig. 3E. In the conventional technology, the number of principal components to be extracted was determined by a residual square value obtained by squaring residuals of the principal components. In this example, on the contrary, up to the fourth components in which a cumulative contribution of principal components exceeds 80 percent are extracted from a manufacturing data set X. Extraction of components up to the fourth principal component was performed and decomposition was made as show in (Math 20). Next, main influences were calculated by (Math 24) for articles of manufacture determined to be non-defective and articles of manufacture determined to be defective, respectively. Fig. 11 shows a result obtained by accumulating main influences ($T^2$ contribution ratio) for every manufacturing data with respect to the articles of manufacture determined to be non-defective and the articles of manufacture determined to be defective.

Fig. 12 shows values obtained by dividing a main influence normalized value of defective articles (Math 29) by a main influence normalized value of non-defective articles (Math 27), i.e., an increase rate of the main influence at the time of defective article manufacturing with respect to that at the time of non-defective article manufacturing in every manufacturing data for comparing the latter (Math 27) and the former (Math 29). Fig. 12 indicates that the manufacturing data with the highest increase rate of main influence is "manufacturing data 1". Therefore, the "manufacturing data 1" is specified as a cause (abnormal factor) of defective article generation.

As mentioned before, it was not possible to specify that the abnormal factor was "manufacturing data 1" with respect to the manufacturing data shown in Fig. 3A to Fig. 3E in the conventional technology. On the contrary to this, according to the abnormal factor specifying method of the invention, it became possible to specify that the abnormal factor was "manufacturing data 1" with sufficient accuracy.

It is to be noted that the above-mentioned abnormal apparatus specifying method may be structured as a program to be executed by a computer.

Such a program may be recorded on a computer-readable recording medium such as CD-ROMs for distribution. By installing the program in a general-purpose computer, the general-purpose computer becomes possible to execute the abnormal apparatus specifying method.

**Claims**

**1.** An abnormal factor specifying method for specifying a factor of defective article generation in a production process in which one or more manufacturing steps are performed on articles of manufacture and an inspection step is performed on the articles of manufacture which have undergone the manufacturing steps, wherein
in the production process, one or more kinds of manufacturing data including a manufacturing condition with respect to the articles of manufacture and an inspection result of the inspection are obtained while being associated with each other for every article of manufacture so that it is determined whether the articles of manufacture are non-defective or defective based on the inspection result, the method comprising:

performing principal component analysis to extract at least one feature quantity best expressing a manufacturing condition of articles of manufacture determined to be non-defective from manufacturing data on the articles of manufacture;
in a feature quantity space expressed with the extracted each feature quantity as an axis, calculating a distance between an origin and a point representing the manufacturing data on each article of manufacture as a main significant difference between average manufacturing data at a time of non-defective article manufacturing and each manufacturing data at a time of defective article manufacturing;
calculating a contribution ratio of each manufacturing data in the main significant difference as each main influence; and
specifying manufacturing data with the main influence at the time of defective article manufacturing being substantially increased from that at the time of non-defective article manufacturing, as an abnormal factor from the manufacturing data.

**2.** An abnormal factor specifying method for specifying a factor of defective article generation in a production process in which one or more manufacturing steps are performed on articles of manufacture and an inspection step is performed on the articles of manufacture which have undergone the manufacturing steps, wherein
in the production process, one or more kinds of manufacturing data including a manufacturing condition for the articles of manufacture and an inspection result of the inspection are obtained while being associated with each other for every article of manufacture so that it is determined whether the articles of manufacture are non-defective or defective based on the inspection result, the method comprising:

performing principal component analysis to extract at least one feature quantity best expressing a manufacturing condition of articles of manufacture determined to be non-defective from manufacturing data on the articles of manufacture;

calculating a residual component, which is not expressed in a feature quantity space expressed with the each feature quantity as an axis, as a sub significant difference for every article of manufacture;

calculating a contribution ratio of each manufacturing data in the sub significant difference as each sub influence; and

specifying manufacturing data with the sub influence at the time of defective article manufacturing being substantially increased from that at the time of non-defective article manufacturing, as an abnormal factor from the manufacturing data.

3. The abnormal factor specifying method as claimed in Claim 1, comprising:

calculating a residual component, which is not expressed in the feature quantity space expressed with the each feature quantity as an axis, as a sub significant difference for every article of manufacture;

calculating a contribution ratio of each manufacturing data in the sub significant difference as each sub influence; and

specifying manufacturing data with the sub influence as well as the main influence at the time of defective article manufacturing being substantially increased more than those at the time of non-defective article manufacturing, as an abnormal factor from the manufacturing data.

4. The abnormal factor specifying method as claimed in Claim 1 or 3, comprising:

with respect to articles of manufacture determined to be non-defective, dividing each cumulative total value which is obtained by totaling the main influences for every manufacturing data, by a sum total produced by totaling the main influences of all the associated manufacturing data, to obtain a main influence normalized value of the non-defective articles which expresses the main influence for each of the manufacturing data, while with respect to articles of manufacture determined to be defective, dividing each cumulative total value which is obtained by totaling the main influences for every manufacturing data, by a sum total produced by totaling the main influences of all the associated manufacturing data, to obtain a main influence normalized value of the defective articles which expresses the main influence for each of the manufacturing data; and with respect to each of the manufacturing data, comparing the main influence normalized value of the non-defective articles with the main influence normalized value of the defective articles, to specify manufacturing data which is the abnormal factor.

5. The abnormal factor specifying method as claimed in Claim 2 or 3, comprising:

with respect to articles of manufacture determined to be non-defective, dividing each cumulative total value which is obtained by totaling the sub influences for every manufacturing data, by a sum total produced by totaling the sub influences of all the associated manufacturing data, to obtain a sub influence normalized value of the non-defective articles which expresses the sub influence for each of the manufacturing data, while with respect to articles of manufacture determined to be defective, dividing each cumulative total value which is obtained by totaling the sub influences for every manufacturing data, by a sum total produced by totaling the sub influences of all the associated manufacturing data, to obtain a sub influence normalized value of the defective articles which expresses the sub influence for each of the manufacturing data; and with respect to each of the manufacturing data, comparing the sub influence normalized value of the non-defective articles with the sub influence normalized value of the defective articles, to specify manufacturing data which is the abnormal factor.

6. The abnormal factor specifying method as claimed in Claim 3, comprising:

with respect to articles of manufacture determined to be defective, dividing each cumulative total value which is obtained by totaling the main influences for every manufacturing data, by a number of the articles of manufacture determined to be defective, and averaging resultant values, to obtain a main influence average value of the defective articles which expresses an average value of the main influences with respect to each of the manufacturing data, while with respect to articles of manufacture determined to be non-defective, dividing each cumulative total value which is obtained by totaling the main influences for every manufacturing data, by a number of the articles of manufacture determined to be non-defective, and averaging resultant values, to obtain a main influence average value of the non-defective articles which expresses an average value of the main influences with respect to each of the manufacturing data;

with respect to the articles of manufacture determined to be defective, dividing each cumulative total value which is obtained by totaling the sub influences for every manufacturing data, by the number of the articles of manufacture determined to be defective, and averaging resultant values, to obtain a sub influence average value of the defective articles which expresses an average value of the sub influences with respect to each of the manufacturing data, while

with respect to the articles of manufacture determined to be non-defective, dividing each cumulative total value which is obtained by totaling the sub influences for every manufacturing data, by the number of the articles of manufacture determined to be non-defective, and averaging resultant values, to obtain a sub influence average value of the non-defective articles which expresses an average value of the sub influences with respect to each of the manufacturing data; and

specifying manufacturing data which is the abnormal factor, based on a ratio between the main influence average value of the defective articles and the main influence average value of the non-defective articles and a ratio between the sub influence average value of the defective articles and the sub influence average value of the non-defective articles with respect to each of the manufacturing data.

7. The abnormal factor specifying method as claimed in Claim 3, comprising:

standardizing the main influence for every manufacturing data with respect to articles of manufacture determined to be defective with use of an average value obtained by averaging the main influences with respect to the articles of manufacture determined to be non-defective for all the associated manufacturing data and with use of a standard deviation of the main influences obtained for all the associated manufacturing data on the articles of manufacture determined to be non-defective, to obtain a main influence standardized value for every manufacturing data, while

standardizing the sub influence for every manufacturing data with respect to articles of manufacture determined to be defective with use of an average value obtained by averaging the sub influences with respect to the articles of manufacture determined to be non-defective for all the associated manufacturing data and with use of a standard deviation of the sub influences obtained for all the associated manufacturing data on the articles of manufacture determined to be non-defective, to obtain a sub influence standardized value for every manufacturing data; and

specifying manufacturing data which is the abnormal factor based on the main influence standardized value and the sub influence standardized value.

8. An abnormal factor specifying system for specifying a factor of defective article generation in a production process in which one or more manufacturing steps are performed on articles of manufacture and an inspection step is performed on the articles of manufacture which have undergone the manufacturing steps, wherein in the production process, one or more kinds of manufacturing data including a manufacturing condition with respect to the articles of manufacture and an inspection result of the inspection are obtained while being associated with each other for every article of manufacture so that it is determined whether the articles of manufacture are non-defective or defective based on the inspection result, the system comprising:

a storage section for associating and storing the manufacturing data and the inspection result in the inspection process for every article of manufacture; and

an abnormal factor specifying section for performing the abnormal factor specifying method as claimed in Claim 1 or 2 with use of a memory content of the storage section.

9. An abnormal factor specifying program for causing a computer to execute the abnormal factor specifying method as claimed in Claim 1 or 2.

10. A computer-readable recording medium with the abnormal factor specifying program as claimed in Claim 9 recorded thereon.

# Fig.1

```
                    ┌─────────────┐
                    │    START    │
                    └─────────────┘
                           │
  S1  ┌──────────────────────────────────────────┐
      │            OBTAIN STEP DATA               │
      └──────────────────────────────────────────┘
                           │
  S2  ┌──────────────────────────────────────────┐
      │            DISTINGUISH DATA               │
      └──────────────────────────────────────────┘
                           │
  S3  ┌──────────────────────────────────────────┐
      │       PRINCIPAL COMPONENT ANALYSIS        │
      └──────────────────────────────────────────┘
                           │
  S4  ┌──────────────────────────────────────────┐
      │         EXTRACT REPRESENTATIVE            │
      │          PRINCIPAL COMPONENT             │
      └──────────────────────────────────────────┘
                           │
  S5  ┌──────────────────────────────────────────┐
      │            CALCULATE MAIN,                │
      │       SUB SIGNIFICANT DIFFERENCES         │
      └──────────────────────────────────────────┘
                           │
  S6  ┌──────────────────────────────────────────┐
      │      CALCULATE MAIN, SUB INFLUENCES       │
      └──────────────────────────────────────────┘
                           │
  S7  ┌──────────────────────────────────────────┐
      │     DETERMINE SIGNIFICANT DIFFERENCE      │
      └──────────────────────────────────────────┘
                           │
  S8  ┌──────────────────────────────────────────┐
      │          OUTPUT FACTOR CANDIDATE          │
      └──────────────────────────────────────────┘
                           │
                    ┌─────────────┐
                    │     END     │
                    └─────────────┘
```

## Fig.2

OPERATOR 9

10

EXECUTE/SET

PRESENT ABNORMAL FACTOR

40

ABNORMAL FACTOR
SPECIFYING SECTION

OUTPUT

11

DISPLAY UNIT

50

OBTAIN DATA

DATABASE

12

13

INSPECTION
DATA

MANUFACTURING
DATA

60

ACCUMULATE DATA

14

15

INSPECTION
STEP

MANUFACTURING
STEP

PRODUCTION PROCESS

22

## Fig.3A

MANUFACTURING DATA 1

## Fig.3B

MANUFACTURING DATA 2

## Fig.3C

OK
⇕
NG

MANUFACTURING DATA 3

## Fig.3D

OK
⇕
NG

MANUFACTURING DATA 4

## Fig.3E

MANUFACTURING DATA 5

## Fig.4

RESIDUAL SQUARE

NUMBER OF PRINCIPAL COMPONENTS

## Fig.5

### RESIDUAL COMPONENT

## Fig.6

### RESIDUAL COMPONENT OF NO.256

## Fig.7

T$^2$ STATISTIC VALUE

HOTELLING T$^2$ STATISTIC VALUE

No. 167

CL

ARTICLE OF MANUFACTURE NO.

## Fig.8

No. 167

PRINCIPAL COMPONENT

## Fig.9

SECOND PRINCIPAL COMPONENT

MANUFACTURING DATA

## Fig.10

NUMBER OF PRINCIPAL COMPONENTS

*Fig.11*

*Fig.12*

## INTERNATIONAL SEARCH REPORT

| International application No. |
| --- |
| PCT/JP2008/061332 |

A.  CLASSIFICATION OF SUBJECT MATTER
*G05B19/418*(2006.01)i, *G06Q50/00*(2006.01)i

According to International Patent Classification (IPC) or to both national classification and IPC

B.   FIELDS SEARCHED

Minimum documentation searched (classification system followed by classification symbols)
G05B19/418, G06Q50/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| A | JP 2003-114713 A  (Nippon Steel Corp.), 18 April, 2003 (18.04.03), Full text; all drawings (Family: none) | 1-10 |
| A | JP 2004-355330 A  (Fujitsu Ltd.), 16 December, 2004 (16.12.04), Par. No. [0037] (Family: none) | 1-10 |
| A | JP 7-114601 A  (Hitachi, Ltd.), 02 May, 1995 (02.05.95), Full text; all drawings (Family: none) | 1-10 |

| ☒  Further documents are listed in the continuation of Box C. | ☐  See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 August, 2008 (12.08.08) | 19 August, 2008 (19.08.08) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

| **INTERNATIONAL SEARCH REPORT** | International application No. |
|---|---|
| | PCT/JP2008/061332 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-287154 A (Hitachi, Ltd.),<br>01 November, 1996 (01.11.96),<br>Full text; all drawings<br>(Family: none) | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003114713 A